# EUROPEAN PATENT APPLICATION

(11) **EP 4 787 929 A1**
(43) Date of publication of application: **05.08.2026**
(21) Application number: 24886316.9
(22) Date of filing: 31.10.2024
(51) Int. Cl.: H04W 24/02, H04L 41/0833, H04L 41/0894, H04L 41/14, H04W 52/02, H04W 28/02

(54) **METHOD AND DEVICE FOR CONTROLLING DATA TRANSMISSION TO SAVE NETWORK ENERGY IN WIRELESS COMMUNICATION SYSTEM**

(30) Priority: 01.11.2023 KR 20230149484
(71) Applicant: Samsung Electronics Co., Ltd., Suwon-si, Gyeonggi-do 16677 (KR)
(72) Inventor: PARK, Jungshin, Suwon-si, Gyeonggi-do 16677 (KR); SUH, Dongeun, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2024/016956
(87) International publication number: WO 2025/095644

(57) **Abstract**

The present disclosure relates to a 5G or 6G communication system for supporting higher data transmission rates. A method performed by a session management function (SMF) entity in a mobile communication system comprises receiving, from an access and mobility management function (AMF) entity, a request for a protocol data unit (PDU) session for a service associated with a user equipment (UE), transmitting, to a policy control function (PCF) entity based on the request, a first message for requesting information on an energy class for the service, receiving, from the PCF entity, a second message including the information about the energy class in response to the first message, and identifying whether a paging signal for the UE is delayed to be transmitted based on the information on the energy class and information on a network energy state associated with the PDU session.

## Description

### [Technical Field]

The disclosure relates to a wireless communication system and, more particularly, to a method and an apparatus for transmitting data considering energy efficiency and power reduction of a network in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure are a device and a method capable of effectively providing services in a mobile communication system.

### [Solution to Problem]

According to an embodiment of the disclosure, a method performed by a session management function (SMF) entity in a mobile communication system may include receiving a request for a protocol data unit (PDU) session for a service associated with a user equipment (UE) from an access and mobility management function (AMF) entity, transmitting a first message for requesting information on an energy class for the service to a policy control function (PCF) entity, based on the request, receiving a second message including the information on the energy class from the PCF entity in response to the first message, and identifying whether a paging signal for the UE is delayed to be transmitted based on the information on the energy class and information on a network energy state associated with the PDU session.

### [Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a diagram illustrating a wireless communication system to which a data transmission control method considering a network energy state is applied according to an embodiment of the disclosure.
FIG. 2 is a diagram illustrating a general operation of the data transmission control method considering the network energy state in a wireless communication system according to an embodiment of the disclosure.
FIG. 3A is a diagram illustrating a series of signal procedures for controlling access and data transmission of a UE by applying a method proposed in a wireless communication system according to an embodiment of the disclosure.
FIG. 3B is a diagram illustrating a series of signal procedures for controlling access and data transmission of the UE by applying the method proposed in the wireless communication system according to an embodiment of the disclosure.
FIG. 4 illustrates a functional structure of a base station according to an embodiment of the disclosure.
FIG. 5 illustrates an example of a functional structure of a UE according to an embodiment of the disclosure.
FIG. 6 illustrates an example of a functional structure of a core network entity according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing embodiments set forth herein, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The embodiments are provided only to completely set forth the disclosure and inform those skilled in the art of the scope of the disclosure. The scope of the disclosure to be protected is defined only by the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in an embodiment may include one or more processors and/or devices.

In the following description, some of terms and names defined in the 3rd generation partnership project (3GPP)-based communication standards (e.g., standards for fifth-generation (5G), new radio (NR), long term evolution (LTE), or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The following detailed description of embodiments of the disclosure is mainly directed to new RAN (NR) as a radio access network and packet core (5G system or 5G core network or next generation core (NG Core)) as a core network in the 5G mobile communication standards specified by the 3rd generation partnership project (3GPP) that is a mobile communication standardization group, but the main idea of the disclosure may also be applied to other communication systems having similar technical backgrounds. For example, based on determinations by those skilled in the art, the main gist of the disclosure may be applied through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions(NFs), and the analysis results may be used independently in each NF.

The 5G mobile communication system supports the NFs to use the result of collection and analysis of network-related data (hereinafter referred to as network data) through the NWDAF. This is intended to allow each NF to provide the collection and analysis of necessary network data in a centralized form in order to effectively provide its own functions. The NWDAF may collect and analyze network data by using a network slice as a basic unit. However, the scope of the disclosure is not limited to the network slice unit, and the NWDAF may additionally analyze various pieces of information (e.g., quality of service) acquired from a user equipment (UE), a protocol data unit (PDU) session, an NF status, and/or an external service server.

The result analyzed through the NWDAF may be delivered to each NF that has requested the corresponding analysis result, and the delivered analysis result may be used to optimize network management functions such as quality of service (QoS) guarantee/enhancement, traffic control, mobility management, and load distribution.

A unit node that performs the respective functions provided by the 5G network system may be defined as an NF (or referred to as NF entity or NF node). For example, each NF may include at least one of, for example, an access and mobility management function (AMF) for managing access of a user equipment (UE) to an access network (AN) and mobility of the UE, a session management function (SMF) for performing session-related management, a user plane function for managing a user data plane, and a network slice selection function (NSSF) for selecting a network slice instance available for the UE.

With the advance of mobile communication systems as described above, not only wireless communication systems become complicated and can provide various services, but also as the number of apparatuses used in wireless communication systems increase, there is a need for a function of raising the efficiency of energy consumed in lots of apparatuses of wireless communication systems without impairing the quality of service of users.

The disclosure defines a data transmission method and device considering network energy efficiency and energy consumption saving in wireless communication systems.

The technical subjects pursued in embodiments of the disclosure may not be limited to the above-mentioned matters, and other technical subjects which are not mentioned herein may be clearly understood from the following description by those skilled in the art to which the disclosure pertains.

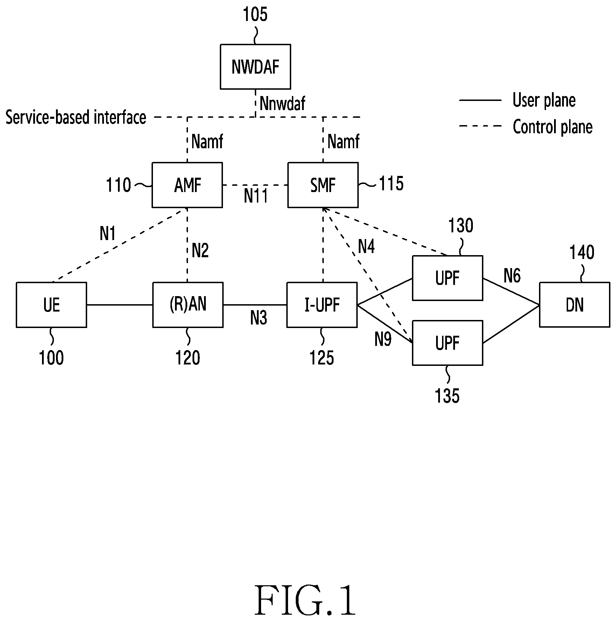

FIG. 1 is a diagram illustrating a wireless communication network including a network data collection and analysis function (NWDAF) according to an embodiment of the disclosure.

Referring to FIG. 1, the NWDAF 105 according to an embodiment may collect network data from at least one source NF in various ways. For example, at least one source NF that is a target to collect data by the NWDAF 105 may include NFs within a 5G core network, such as an AMF 110, a SMF 115, UPFs 130 and 135, and an I-UPF 125, an application function (AF) for providing an efficient service, a network exposure function (NEF), and/or an operation, administration, and maintenance (OAM).

According to an embodiment, the AMF 110 may access (or may be connected to) a UE 100 and a radio access network (RAN) 120, and the UPFs 130 and 135 and/or the I-UPF 125 may connect the user traffic of the UE 100 through the RAN 120 to at least one data network (DN) 140.

In addition, the NWDAF 105 may provide analysis of network data collected from the network or the outside to at least one consumer NF. The NWDAF 105 may collect and analyze a load level of a network slice instance, and may provide the same to the NSSF to be used for selection by a specific UE. A service-based interface defined in the 5G network may be used between the NFs 110 and 115 and the NWDAF 105 to make a request for analysis information or transmit analysis information including an analysis result. For example, for a method of transmitting analysis information, a hypertext transfer protocol (HTTP) and/or a JavaScript object notation (JSON) document may be used, but the method of transmitting the analysis information of the disclosure is not limited thereto.

For example, the collected data of the NWDAF 105 may include at least one of an application identifier (application ID) from a point coordination function (PCF), Internet protocol (IP) filter information, a media/application bandwidth, a UE identifier from the AMF 110, location information, a destination data network name (DNN) from the SMF 115, a UE IP, a QoS flow bit rate, a QoS flow ID (QFI), a QoS flow error rate, a QoS flow delay, or a traffic usage report from the UPF.

According to an embodiment, the NWDAF 105 may additionally collect information from an OAM, which is an entity (e.g., a network entity) that may affect a connection between the UE and a service server, in addition to the NFs that constitute the core network, and use the information for analysis. For example, the information additionally collected and used for analysis may include at least one of an NF resource status, an NF processing capability (throughput), service level agreement (SLA) information, a UE status from the UE, UE application information, a UE usage pattern, an application identifier of a service provided from the AF, service experience, or a traffic pattern.

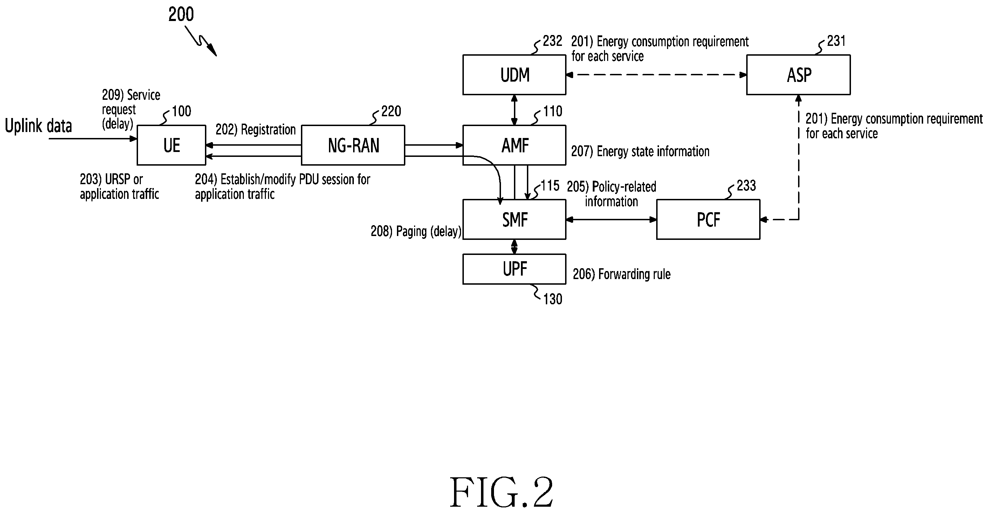

FIG. 2 is a diagram illustrating a general operation of a data transmission control method considering a network energy state in a wireless communication system according to an embodiment of the disclosure.

According to an embodiment, in operation 201, a wireless communication system 200 may receive, from a service provider (an application service provider (ASP)) 231 or an application function (AF) for supporting the service provider, energy consumption requirement (reference) information for each service provided to a UDM 232 or a PCF 233 by the service provider or a subscriber UE(s) using the service. For example, the UDM 232 may receive information on energy requirements for the UEs from the ASP 231. For example, the PFC 233 may receive the information on the energy requirements for the UEs from the ASP 231.

For example, the energy consumption requirement (reference) information for each service or subscriber UE(s) may include a parameter (e.g., a parameter in the form of a pre-specified level) that specifies whether maximum (Max)/medium (Med)/minimum (Min) energy consumption is allowed for providing a predetermined service. For example, the energy consumption requirement information may indicate whether a service can be provided using up to maximum energy when a predetermined service is provided. For example, the energy consumption requirement information may indicate whether to provide a service by using up to the minimum energy when a predetermined service is provided. For example, the energy consumption requirement information may indicate whether to provide a service by using up to the medium energy when a predetermined service is provided. For example, the amount of energy consumption corresponding to the maximum/medium/minimum reference may be mapped to a preconfigured value between the operator and the ASP. For example, the energy consumption requirement information may include a parameter indicating an amount of energy that can be consumed to provide a predetermined service.

For example, a parameter for specifying an amount of energy allowed for providing a predetermined service may specify an amount of allowed energy in the form of a numerical value such as an amount of consumption per hour and/or a total amount of consumption.

According to an embodiment, the UDM 232 or the PCF 233 may store the requirement information received from the ASP 231 or the AF in order to control data transmission of the UE(s).

According to an embodiment, in operation 202, the UE 100 may perform a registration process with the wireless communication network. For example, the UE 100 may perform the registration process with the wireless communication network through the NG-RAN 220. In the registration process, the UE 100 may receive UE route selection policy (URSP) information (or separate parameter information that defines the energy usage reference) including the energy usage reference for each service (for all services used by the UE in case that the energy usage reference is configured for each UE). As another example, when the energy usage reference is different for each UE, the UE 100 may receive URSP information including the energy usage reference for all services of the UE 100. As another example, the UE 100 may receive URSP information including the energy usage reference for each service and/or URSP information including the energy usage reference for all services through a separate UE configuration update (UCU) process or a separate control message. The UE 100 may perform a process of selecting/configuring a PDU session for transmitting data for each service by applying the received energy usage reference information (Registration).

According to an embodiment, in operation 203, the UE 100 may identify whether an appropriate protocol data unit (PDU) session, which satisfies the energy usage reference, exists for transmission of data belonging to a specific service of the UE, by applying the energy usage reference information included in the URSP (or a separate parameter therefor). The UE 100 may transmit data by using the appropriate PDU session that satisfies the energy usage reference and, when there is no appropriate PDU session that satisfies the energy usage reference, may determine or identify whether to perform a process of configuring a new PDU session to which the energy usage reference is applied. For example, when an amount of energy allowed when a service is provided is a first amount of energy, the appropriate PDU session that satisfies the energy usage reference may refer to a case in which an amount of energy consumed when a PDU session is established and data is transmitted is a second amount of energy which is smaller than or equal to the first amount of energy. However, this is only an example, and the disclosure is not limited thereto. That is, when the amount of energy consumption of the PDU session is smaller than the amount of allowed energy consumption of the service, the PDU session may correspond to the appropriate PDU session (URSP or app. traffic).

In operation 204, the UE 100 may perform a procedure for modifying or configuring a PDU session with the wireless communication network, according to the determination in operation 203. In this case, the session modification request or session configuration request message of the UE 100 may include an energy usage reference parameter (e.g., energy class) for requesting the application to the PDU session, in addition to information such as single network slice selection assistance information (S-NSSAI) and/or a data network name (DNN). In addition, a session modification response or session establishment response message may include an energy usage reference parameter (e.g., energy class) determined to be applied to the PDU session, in addition to information such as the S-NSSAI and/or DNN determined by the network (PDU Session Est/Mod for app. Traffic) (+energy class).

According to an embodiment, in operation 205, the SMF 115 receiving the request message from the UE 100 may transfer the S-NSSAI information, DNN information, and/or energy class information received from the UE to the PCF 233. In another example, the UE 100 may receive policy information to be applied to the corresponding UE or session from the PCF 233 (Policy association (+energy class)).

For example, the policy information may include energy class information to be applied to the UE 100 or a PDU session. For example, the energy class information may be determined (or mapped) by the UDM 232 or the PCF 233, based on energy consumption allowable requirement information for each service or each of the UE(s) and/or an operator policy received from the ASP 231 or the AF and stored in operation 201. For example, the energy class information may be indicated to specify a value that designates a relative priority between respective operations (e.g., class 1 > class 2 > class 3 > ...), or designates an allowable maximum (or minimum) energy usage amount (e.g., class 1: max. X KWh) or maximum energy usage rate (e.g., class 1: Y KW/sec).

For example, when energy class information is specified in the order of class 1, class 2, and class 3 according to the relative priority, class 1 may have a relatively higher priority than class 2 in terms of energy usage. Class 2 may have a relatively higher priority than class 3. However, this is only an example, and class 1, class 2, and class 3 may be configured to have relatively low priorities in the order of class 1, class 2, and class 3.

According to an embodiment, in operation 206, the SMF 115 may include an energy class, buffering required, a max. (or min.) buffer size, or max. (or min.) buffering time information that specifies the energy usage reference in data processing reference information (e.g., forwarding rule, detection rule, ...) to be applied to the modified or configured PDU session requested by the UE 100, based on the policy information received from the PCF 233. For example, the buffering required may be a parameter for reducing a transmission rate or specifying whether transmission delay is allowed (or required) when transmission data or reception data of the UE 100 (or from the UE) to a server is determined to exceed the energy consumption reference through the application of the energy consumption reference in the network. For example, the buffering required may indicate whether the delayed transmission of data is allowed based on the energy consumption reference (Forwarding Rule (+energy class, buffering max. buffer/time).

For example, the max. (or min.) buffer size may be used as a value indicating the maximum (buffer) size of data allowed to reduce or delay the transmission rate or a minimum (buffer) size for configuring minimum delay (buffering) required before data transmission for the purpose of reducing or delaying the transmission rate when the energy consumption in the process of transmitting UE- or service-specific data through the network is determined to exceed a reference through the application of an energy state of the radio communication network and/or a predetermined energy consumption reference (e.g., a predetermined ratio of renewable energy consumption requirements, an energy class, etc.). For example, the max buffer size may indicate a maximum amount of data (e.g., a maximum amount of buffered data) that is allowed to reduce or delay the transmission rate in order to limit energy consumed for transmission, based on the network energy state and/or the predetermined energy consumption reference. For example, the minimum buffer size may indicate the minimum buffer size as a value for requiring to buffer at least a predetermined amount of data before each network equipment transmits the data of the corresponding service (or UE) in order to reduce or delay the transmission rate to limit the energy consumed for transmission, based on the network energy state and/or the predetermined energy consumption reference.

For example, the max. (or min.) buffer time may be used as a value indicating the maximum (buffer) time in which delay (buffering) is allowed or the minimum (buffer) time for configuring the minimum delay required until transmission during the process in which UE- or service-specific data is transmitted via the network through the application of the network energy state and/or the predetermined energy consumption reference. For example, the max buffer time may indicate a maximum buffer time for which delay (buffering) is allowed based on the network energy state and/or the predetermined energy consumption reference. For example, the min buffer time may indicate a minimum buffer time for minimum delay, based on the network energy state and/or the predetermined energy consumption reference.

According to an embodiment, in operation 207, the AMF 110 or the PCF 233 may transfer the modified energy consumption state information of the network to the SMF 115. The SMF 115 receiving the energy consumption state information may transfer, to the UPF 130, new energy reference information (that is, the energy class, the buffering required, the max. (or min.) buffer size, and/or the max. (or min.) buffering time parameter, or the like transmitted in operation 206) to be applied to sessions used for each UE or each service and/or the modified energy consumptions state information received from the AMF 110 (energy state info,).

According to an embodiment, in operation 208, when the a request for paging for data transmission to the UE in an idle mode is made, SMF 115 may perform an operation of delaying the paging request for the UE for a predetermined time, based on the energy usage reference information (e.g., energy class, buffering required, max. (or min.) buffer size, max. (or min.) buffering time, or the like) of the UE or the corresponding service and operator configuration information. For example, in the state in which energy consumption of the network is equal to or higher than a predetermined level, the SMF 115 may delay a paging request message to make a request for waking up the UE operating in the idle mode for a predetermined time, based on the time configured by the operator and the energy usage reference information (for example, class, buffering required, max. (or min.) buffer size, max. (or min.) buffering time, or the like) and transfer the same to the AMF 110 in order to transmit data of a session related to the UE or service having a low energy class in the energy usage reference information. As another example, the AMF 110, instead of the SMF 115, may perform an operation of delaying paging transmission to the UE 100, based on the energy usage reference information and the operator configuration information applied to the UE 100, in order to control the energy consumption in units of UEs with respect to the operation of delaying the paging request for a predetermined time.

According to an embodiment, in operation 209, the UE 100 may delay transmission of a service request message for requesting activating a session for a request for uplink data transmission, based on the energy usage reference information (e.g., energy class, etc.) indicated from the network through operation 204 or a separate process for a specific service or all data traffic of the UE.

For example, instead of directly transmitting the service request message to transmit data related to a service and requesting for activating the session which can be transmitted to the network, the UE 100 in which a low energy class is configured may transmit the service request message after the delay for a predetermined time configured by the operator for each energy class with reference to the network energy state or the like. For example, the first UE having a first energy class may transmit a service request message after a first delay time corresponding to the first energy class has elapsed in order to transmit data related to the service. The second having a second energy class may transmit a service request message after a second delay time corresponding to the second energy class has elapsed in order to transmit data related to the service. In this case, the first delay time and the second delay time may be different.

That is, by differentiating the time required to activate a session for data transmission according to the energy class configured for the UE or each PDU session, energy consumption of the network used by the UE or the session to transmit data may be controlled.

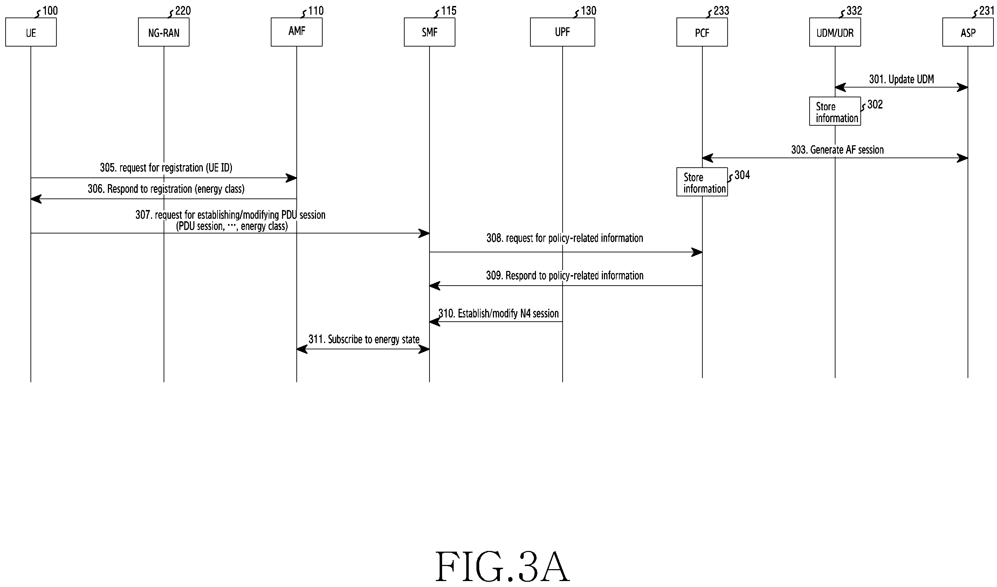

FIG. 3A is a diagram illustrating s a series of signal procedures for controlling access and data transmission of a UE by applying a method proposed in a wireless communication system according to an embodiment of the disclosure.

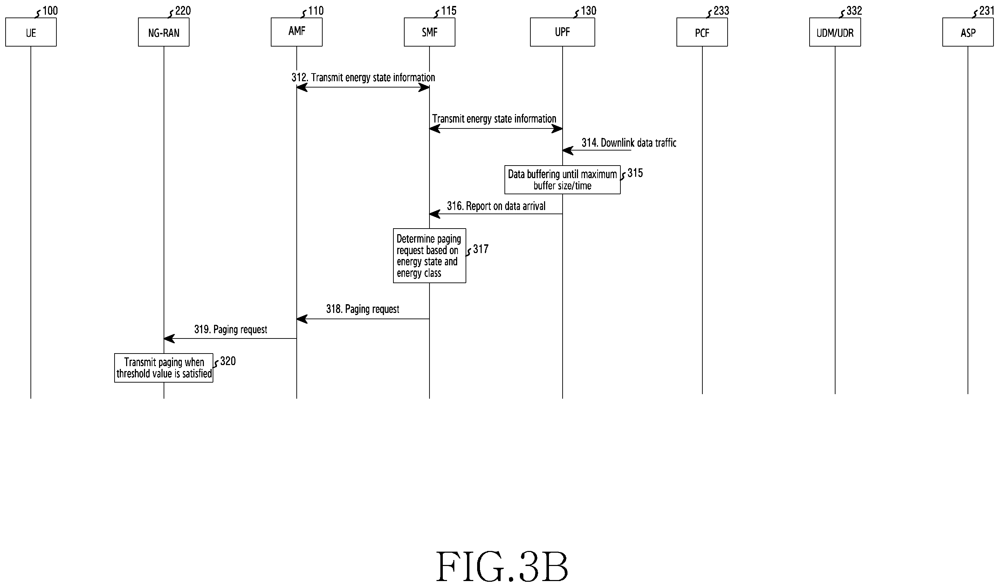

FIG. 3B is a diagram illustrating a series of signal procedures for controlling the access and data transmission of the UE by applying the method proposed in the wireless communication system according to an embodiment of the disclosure.

Referring to FIGs. 3A and 3B, in operation 301 according to an embodiment, the ASP 231 (or AF) may transmit request information including an energy requirement to be applied to the UE 100 or a specific service of the UE 100 to a wireless communication network. For example, the ASP 231 may make a request for information on the energy requirement to the UDM/UDR 332. The UDM/UDR 332 may correspond to the UDM 232 in FIG. 2 (UDM Update (UE ID, App ID, Traffic Filter, quality of service (QoS), Energy Requirement).

For example, the request message may be delivered to a UDM (or UDR) 332 that manages subscriber information of the wireless communication network. For example, the request message may be transferred to the UDM (or UDR) 332 directly or via a network exposure function (NEF) according to a trust relationship (or configuration information) configured between the ASP 231 (or AF) and a wireless communication operator. For example, the request message may include information such as an identifier of the UE, an identifier of an application that transmits the request message, a traffic filter for distinguishing data traffic transmitted through the UE 100 or a specific service, a quality of service (QoS) required at the time of data transmission, and/or an amount of required energy that may be consumed in the network (or the entire system) to support data transmission of the UE 100 and the service. For example, the wireless communication network receiving the request message may transmit, in response thereto, a response message including information on the service quality and the amount of energy consumption that are acceptable in the wireless communication system with regard to the request.

According to an embodiment, in operation 302, the UDM (or UDR) 332 may store the information such as the identifier of the UE, the identifier of the application that transmits the request message, the quality of service (QoS) required at the time of transmission of data to be applied to data traffic designated by the traffic filter for distinguishing the data traffic transmitted through the UE 100 or the specific service, and/or the amount of required energy that may be consumed in the network (or the entire system) to support data transmission of the UE 100 and the service between the ASP 231 (or AF) and the wireless communication system through operation 301, together with the identifier of the UE, the identifier of the application that transmits the request message, and traffic filter information for distinguishing data traffic transmitted through the UE 101 or the specific service (Store the information).

For example, in addition to the quality of service (QoS) that the UDM (or UDR) 332 has contracted with the ASP 231 (or AF) for the data traffic transmitted through the UE 100 or the specific service or the amount of required energy that may be consumed in the network (or the entire system) to support data transmission for the UE 100 and the service, the stored information may include a QoS and energy class information to be applied to the data traffic in the wireless communication system through the application of the same.

For example, a value for specifying the energy class may be designated in the form of a value (e.g., class 1 > class 2 > class 3 > ...) for designating a relative priority between respective energy classes by an operator policy or a configuration. For example, the value for designating the energy class may be expressed in the form of designating an allowable amount of maximum (or minimum) energy usage (e.g., class 1: max. X KWh) or a maximum energy consumption rate (for example, class 1: Y KW/sec). As another example, when determining the value for designating the energy class, a value designated as a standard may be used, or various other forms may be used. As another example, the energy class may be designated in various units. For example, the energy class may be designated as a different value in units of UEs, in units of network slices, in units of specific PDU sessions determined by a combination of slices and DNNs, and/or in units of QoS flows used by the UE or a specific application (or service) of the UE, based on the operator policy.

According to an embodiment, in operation 303, the ASP 231 may transmit, to the wireless communication network, request information including the energy requirement to be applied to the UE 100 or a specific service of the UE 100. For example, the request message may be delivered to the PCF 233 that manages policy information of the UE in the wireless communication network. For example, the request message may be delivered to the PCF 233 directly or through the NEF according to the trust relationship (or configuration information) configured between the ASP 231 (or AF) and the wireless communication operator (AF session creation (UE ID, App ID, Traffic Filter, QoS, Energy Requirement).

For example, the request message may include information such as an identifier of the UE, an identifier of an application that transmits the request message, a traffic filter for distinguishing data traffic transmitted through the UE 100 or a particular service, a quality of service (QoS) required at the time of data transmission, and/or an amount of required energy that may be consumed in the network (or the entire system) to support data transmission of the UE 100 and the service. For example, the PCF 233 of the wireless communication network receiving the request message may transmit, in response to the request message, a response message including the quality of service and information on the amount of energy consumption that are acceptable by the wireless communication system with respect to the request.

According to an embodiment, in operation 304, the PCF 233 may store the information such as the identifier of the UE, the identifier of the application that transmits the request message, the quality of service (QoS) required at the time of transmission of data to be applied to data traffic designated by the traffic filter for distinguishing the data traffic transmitted through the UE 100 or the specific service, and/or the amount of required energy that may be consumed in the network (or the entire system) to support data transmission of the UE 100 and the service between the ASP 231 (or AF) and the PCF 233 in the wireless communication system through operation 302, together with the identifier of the UE, the identifier of the application that transmits the request message, and traffic filter information for distinguishing data traffic transmitted through the UE 101 or the specific service (store the information).

For example, in addition to the quality of service (QoS) that the UDM (or UDR) 233 has contracted with the ASP 231 (or AF) for the data traffic transmitted through the UE 100 or the particular service or the amount of required energy that may be consumed in the network (or the entire system) to support data transmission for the UE 100 and the service, the stored information may include a QoS and energy class information to be applied to the data traffic in the wireless communication system through the application of the same.

For example, a value for specifying the energy class may be specified in the form of a value (e.g., class 1 > class 2 > class 3 > ...) for specifying a relative priority between respective energy classes by an operator policy or a configuration. For example, the value for designating the energy class may be expressed in the form of designating an allowable amount of maximum (or minimum) energy usage (e.g., class 1: max. X KWh) or a maximum energy consumption rate (for example, class 1: Y KW/sec). As another example, when determining the value for designating the energy class, a value designated as a standard may be used, or various other forms may be used.

In addition, the energy class may be designated as a different value in units of UEs, in units of network slices, in units of specific PDU sessions determined by a combination of slices and DNNs, and/or in units of QoS flows used by the UE or a specific application (or service) of the UE, based on the operator policy.

According to an embodiment, in operation 305, the UE 100 may transmit a registration request message to the AMF 110 in the wireless communication system, and the registration request message may include an identifier of the UE (Registration Request (UE ID)).

According to an embodiment, in operation 306, the AMF 110 receiving the registration request message of the UE may perform a process of requesting for subscription information of the UE 100 to the UDM 332 and acquiring the same, extract the energy class information included in the subscription information, and include the same in the registration response message and transmit the registration response message to the UE 100 (Registration Response (Energy class)).

For example, the energy class information may be included in the registration response message as a parameter, or may be included as part of the URSP. As another example, the energy class information may be transmitted to the UE 100 through a separate control message after completion of the registration process. For example, when the energy class information is included in the URSP, the energy class information may be used together with other parameters (e.g., S-NSSAI and DNN, access type, RAT type, etc.) that constitute the URSP, which is used in a process of selecting a PDU session used to transmit traffic generated from the UE 100 or a specific service (or in a process of determining that a PDU session needs to be generated in case that the PDU session has not yet been generated). The energy class information may be used to control the UE 100 to select or generate a PDU session corresponding to a specified energy class for the designated traffic, together with other parameters.

According to an embodiment, in operation 307, the UE 100 may transmit a PDU session generation or modification request message to the SMF 115 through the AMF 110 in the wireless communication system. For example, the request message may include, in addition to the PDU session identifier, S-NSSAI, DNN, and/or energy class information. For example, the energy class included in the request message may be the energy class value transferred to the UE 100 through the process of operation 306. For example, the energy class included in the request message may be a value designated to be used for each UE, each network slice, each PDU session, or each QoS flow, according to the operator policy and configuration, and may refer to an energy class required by the UE to be applied to the currently requested PDU session (PDU Session Est,/Mod Request (PDU Session ID, ..., energy class).

According to an embodiment, in operation 308, the SMF 115 may transmit a message (or a policy provision request message) requesting for providing policy information to be applied to the PDU session to the PCF 233. For example, the request message may include, in addition to a PDU session identifier, an energy class value requested by the UE (Policy Association Request (PDU session ID, ..., energy class).

According to an embodiment, in operation 309, the PCF 233 may transmit a response message including policy information to be applied to the PDU session to the SMF 115. For example, the response message may include, in addition to the PDU session identifier, an energy class value determined by the PCF 233 to be applied to the PDU session. For example, the PCF 233 may determine or identify an energy class to be applied to the PDU session, based on energy consumption requirement information to be applied to traffic of the UE 100 or the service, energy consumption reference information generated through reflection of the operator policy, and/or the operator policy stored after being received from the ASP 231 (or AF) in operation 304 (Policy Association Response).

According to an embodiment, in operation 310, the SMF 115 may determine or identify a detailed parameter for controlling data traffic transmitted and/or received through the PDU session, based on the policy information to be applied to the PDU session received from the PCF 233, and transmit the detailed parameter to the UPF 130. For example, the message may include the energy consumption reference information in addition to the PDU session identifier. For example, the energy consumption reference information may include one or more parameters among the energy class, the buffering required, the max (or min) buffering size, or the max (or min) buffering time (N4 Session Est./Mod (PDU session ID, ..., energy class, max, buffering size, max. buffering time).

For example, the buffering required may be a parameter for designating whether delayed transmission of the data transmitted from the UE (or received from the server by the UE) is allowed (or required) through the application of the energy consumption reference in the network. For example, the buffering required may indicate whether the delayed transmission of data is allowed based on the energy consumption reference.

For example, the max. (or min.) buffer size may be used as a value indicating the maximum (buffer) size in which delay (buffering) is allowed or the minimum (buffer) size for configuring a minimum delay required until transmission during a process in which the UE- or service-specific data is transmitted via the network through the application of the network energy state and/or the predetermined energy consumption reference. For example, the max buffer size may indicate a maximum buffer size in which delay is allowed, based on the network energy state and/or the predetermined energy consumption reference. For example, the min buffer size may indicate a minimum buffer size for minimum delay, based on the network energy state and/or the predetermined energy consumption reference.

For example, the max. (or min.) buffer time may be used as a value indicating the maximum (buffer) time in which delay (buffering) is allowed or the minimum (buffer) time for configuring the minimum delay required until transmission during the process in which UE- or service-specific data is transmitted via the network through the application of the network energy state and/or the predetermined energy consumption reference. For example, the max buffer time may indicate a maximum buffer time for which delay (buffering) is allowed based on the network energy state and/or the predetermined energy consumption reference. For example, the min buffer time may indicate a minimum buffer time for minimum delay, based on the network energy state and/or the predetermined energy consumption reference.

According to an embodiment, in operation 311, the SMF 115 may perform a process of subscribing to an energy state reporting service of AMF 110 to receive a report on an energy state change of network functions (or resources) related to the PDU session of the UE. For example, a subscription request message delivered from the SMF 115 to the AMF 110 during the process of subscribing to the energy state reporting service may include information such as a UE identifier, a PDU session identifier, and/or an S-NSSAI (Energy state subscription (UE ID, PDU Session ID, S-NSSAI, ...).

According to an embodiment, in operation 312, the AMF 110 may transmit information on the change in the network energy state to the SMF 115. For example, a message for reporting the changed state (or the message indicating that the energy state has changed) may include a network energy state parameter for specifying a changed network energy state, in addition to the information such as the UE identifier, the PDU session identifier, and/or the S-NSSAI (Energy state subscription (UE ID, PDU Session ID, S-NSSAI, ...).

According to an embodiment, in operation 313, the SMF 115 may generate new energy consumption reference information, based on the network energy state information received from the AMF 110 and/or the energy class information, the operator policy, and the like included in the policy information designated by the PCF 233 for the PDU session, and may transmit the new energy consumption reference information to the UPF 130. The UPF 130 receiving the new energy consumption reference information may apply the newly received energy consumption reference information to the PDU session (or QoS flow) of the UE to control data transmission and/or reception (N4 Session Mod. (PDU Session ID, ..., energy class, max. buffering size, max. buffering time).

According to an embodiment, in operation 314, the UPF 130 may receive downlink data traffic to be delivered to the UE 100 operating in an active or idle mode or the PDU session from an application server or the like (downlink (DL) data traffic).

According to an embodiment, in operation 315, the UPF 130 may apply the energy consumption reference specified to be applied to the PDU session from the SMF 115 in operation 313 or the like, in order to transmit the received downlink data traffic to the UE. For example, instead of directly transmitting the data delivered from the application to the UE 100, the UPF 130 may transmit data to the UE 100 after delay for a predetermined time (after waiting until the buffer is filled by a predetermined amount) through the application of the max. buffering time (or max. buffering size) parameter configured by the SMF 115. For example, the UPF 130 may perform a process of delaying data transmission until the network energy state value is improved to be equal to or higher than the energy class value, by applying the energy class configured by the SMF 115 and the network energy state information transmitted by the SMF 115. For example, the network energy state value being improved to be equal to or higher than the energy class value may mean that a value of energy consumed in the network is equal to or less than a value of energy allowed for the network (Buffer data until max. buffer size/time).

According to an embodiment, in operation 316, the UPF 130 may delay the traffic received by the idle mode UE for a predetermined time through the process of operation 315 or perform a process of delaying a report to the SMF 115 that downlink data traffic has been received for the idle mode UE (or the specific PDU session of the UE) until the network energy state is improved to be equal to or higher than a reference value. For example, the network energy state being improved to be equal to or higher than the network energy state reference value may substantially mean that a value of energy consumed in the network is equal to or less than a value of energy allowed for the network (Report data arrivial).

According to an embodiment, in operation 317, the SMF 115 may determine, based on the network energy state information, the energy class of the UE (or PDU session), and/or the operator policy, whether to make a request for paging for the idle mode UE. For example, when the network energy state is a state in which excessive energy is consumed and the energy class of the UE (or PDU session) is a low value, the SMF 115 may suspend paging for the idle UE. For example, when the energy class is low (e.g., Class 2), a relatively low priority may be assigned from the perspective of energy consumption as compared to the case of a high energy class (e.g., Class 1), and the SMF 115 may suspend paging for the idle UE in consideration of the network energy state (Decide paging request based on energy state and energy class).

According to an embodiment, in operation 318, the SMF 115 may transmit a message requesting for paging for the UE 100 operating in the idle mode to the AMF 110. For example, the request message may include, in addition to the UE identifier and/or the PDU session identifier, energy class information (Paging request (UE ID, PDU Session ID, energy class)).

According to an embodiment, in operation 319, the AFM receiving the paging request for the UE 100 from the SMF 115 may determine or identify whether to immediately start paging for the idle mode UE or to delay the same, based on the network energy state information, the energy class of the UE 100 (or the PDU session), and/or the operator policy. The AMF 110 may start a paging process for the UE after delay for a predetermined time according to the determination, and may make a request for transmitting a paging signal for the UE 100 to the NG-RAN 220. For example, the paging request message may include, in addition to the UE identifier and/or the PDU session identifier, energy class information (Paging request (UE ID, PDU Session ID, energy class)).

According to an embodiment, in operation 320, the NG-RAN 220 receiving the paging request for the UE 100 from the AMF 110 may determine whether to immediately start paging for the idle mode UE or to delay the same, determine whether to configure a long or short paging cycle, and apply the same to transmission of a paging signal, based on the network energy state information, the energy class of the UE 100 (or PDU session), and/or the operator policy (Send paging when threshold meets).

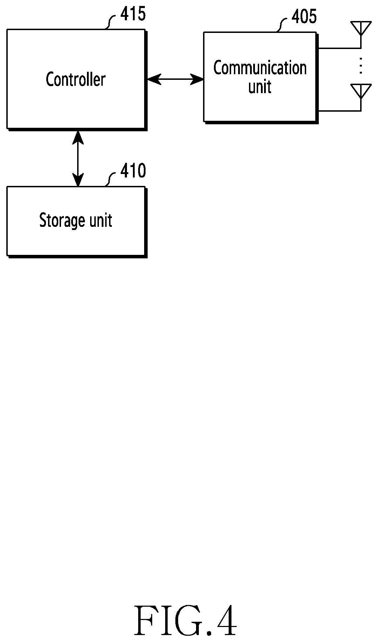

FIG. 4 illustrates a functional structure of a base station according to an embodiment of the disclosure.

Referring to FIG. 4, the structure according to an embodiment illustrated in FIG. 4 may be understood as a structure of the RAN 120 in FIG. 1. As used herein, such terms as "... unit" and "-er" refer to a unit configured to process at least one function or operation, and may be implemented as hardware, software, or a combination of hardware and software.

According to an embodiment, the base station may include a communication unit 405, a storage 410, and/or a controller 415.

The communication unit 405 performs functions for transmitting/receiving signals through a radio channel. For example, the communication unit 405 performs functions of conversion between baseband signals and bitstrings according to the physical layer specifications of the system. For example, during data transmission, the communication unit 405 encodes and modulates a transmitted bitstring to generate complex symbols. In addition, during data reception, the communication unit 405 demodulates and decodes a baseband signal to restore a received bitstring. In addition, the communication unit 405 up-converts a baseband signal to an RF band signal, transmits the same through an antenna, and down-converts an RF band signal received through the antenna to a baseband signal. For example, the communication unit 405 may include a transmission filter, a reception filter, an amplifier, a mixer, an oscillator, a digital to analog converter (DAC), an analog to digital converter (ADC), etc.

In addition, the communication unit 405 may include multiple transmission/reception paths. Moreover, the communication unit 405 may include at least one antenna array including multiple antenna elements. In terms of hardware, the communication unit 405 may include a digital circuit and an analog circuit (e.g., a radio frequency integrated circuit (RFIC)). The digital circuit and the analog circuit may be implemented as a single package. In addition, the communication unit 405 may include multiple RF chains. Furthermore, the communication unit 405 may perform beamforming.

The communication unit 405 transmits and receives signals as described above. Accordingly, all or part of the communication unit 405 may be referred to as a "transmitter", a "receiver", or a "transceiver". In addition, as used in the following description, the meaning of "transmission and reception performed through a radio channel" includes the meaning that the above-described processing is performed by the communication unit 405.

The storage 410 may store basic programs, application programs, and data, such as configuration information, for operation of the main base station. The storage 410 may include a volatile memory, a nonvolatile memory, or a combination of a volatile memory and a nonvolatile memory. In addition, the storage 410 provides the stored data at the request of the controller 415.

The controller 415 controls the overall operation of the base station. For example, the controller 415 transmits and receives signals through the communication unit 405. In addition, the controller 415 records data in the storage 410 and reads the data from the storage 410. In addition, the controller 415 may perform functions of protocol stacks required by communication specifications. To this end, the controller 415 may include at least one processor or microprocessor, or may be a part of a processor. In addition, a part of the communication unit 405 and the controller 415 may be referred to as a communication processor (CP). According to various embodiments, the controller 415 may control to perform synchronization by using a wireless communication network. For example, the controller 415 may control the base station to perform operations according to various embodiments described above.

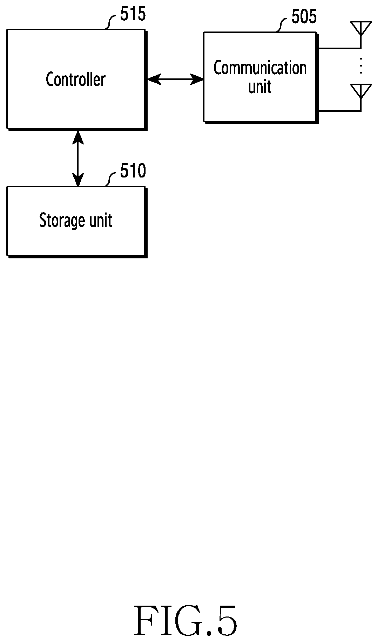

FIG. 5 illustrates an example of a functional structure of a UE according to an embodiment of the disclosure. The structure illustrated in FIG. 5 may be understood as a structure of the UE 201 in FIG.2 or the UE 100 in FIG 1. As used herein, such terms as "... unit" and "... er" refer to a unit configured to process at least one function or operation, and may be implemented as hardware, software, or a combination of hardware and software.

Referring to FIG. 5, the UE includes a communication unit 505, a storage 510, and/or a controller 515.

The communication unit 505 performs functions for transmitting/receiving signals through a radio channel. For example, the communication unit 505 performs functions of conversion between baseband signals and bitstrings according to the physical layer specifications of the system. For example, during data transmission, the communication unit 505 encodes and modulates a transmitted bitstring to generate complex symbols. In addition, during data reception, the communication unit 505 demodulates and decodes a baseband signal to restore a received bitstring. In addition, the communication unit 505 up-converts a baseband signal to an RF band signal, transmits the same through an antenna, and down-converts an RF band signal received through the antenna to a baseband signal. For example, the communication unit 505 may include a transmission filter, a reception filter, an amplifier, a mixer, an oscillator, a digital to analog converter (DAC), an analog to digital converter (ADC), and the like.

In addition, the communication unit 505 may include multiple transmission/reception paths. Moreover, the communication unit 505 may include at least one antenna array including multiple antenna elements. In terms of hardware, the communication unit 505 may include a digital circuit and an analog circuit (e.g., a radio frequency integrated circuit (RFIC)). The digital circuit and the analog circuit may be implemented as a single package. In addition, the communication unit 505 may include multiple RF chains. Furthermore, the communication unit 505 may perform beamforming.

The communication unit 505 transmits and receives signals as described above. Accordingly, all or part of the communication unit 505 may be referred to as a "transmitter", a "receiver", or a "transceiver". In addition, as used in the following description, the meaning of "transmission and reception performed through a radio channel" includes the meaning that the above-described processing is performed by the communication unit 505.

The storage 510 stores basic programs, application programs, and data, such as configuration information, for operation of the main base station. The storage 510 may include a volatile memory, a nonvolatile memory, or a combination of a volatile memory and a nonvolatile memory. In addition, the storage 510 provides the stored data at the request of the controller 515.

The controller 515 controls the overall operation of the UE. For example, the controller 515 transmits and receives signals through the communication unit 505. In addition, the controller 515 records data in the storage 510 and reads the data from the storage 510. In addition, the controller 515 may perform functions of protocol stacks required by communication specifications. To this end, the controller 515 may include at least one processor or microprocessor, or may be a part of a processor. In addition, a part of the communication unit 505 and the controller 515 may be referred to as a communication processor (CP). According to various embodiments, the controller 515 may control to perform synchronization by using a wireless communication network. For example, the controller 515 may control the UE to perform operations according to various embodiments described above.

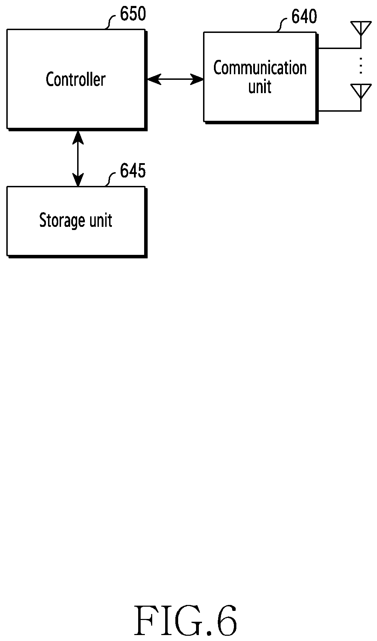

FIG. 6 illustrates an example of a functional structure of a core network entity according to an embodiment of the disclosure. A structure of a core network entity in a wireless communication system according to various embodiments of the disclosure is illustrated. The structure illustrated in FIG. 6 may be understood as a structure of a device having at least one function among network entities including the SMF 115, the AMF 110, and the UPF 130 in FIG. 1. As used herein, such terms as "... unit" and "... er" refer to a unit configured to process at least one function or operation, and may be implemented as hardware, software, or a combination of hardware and software.

Referring to FIG. 6, the core network entity may include a communication unit 640, a storage 645, and/or a controller 650.

The communication unit 640 may provide an interface for communicating with other devices in the network. That is, the communication unit 640 converts a bitstring, transmitted from the core network entity to any other device, into a physical signal, and converts a physical signal, received from any other device, into a bitstring. The communication unit 640 may transmit/receive signals. Accordingly, the communication unit 640 may be referred to as a modem, a transmitter, a receiver, or a transceiver. The communication unit 640 enables the core network entity to communicate with other devices or the system via a backhaul connection (e.g., wired backhaul or wireless backhaul) or via a network.

The storage 645 stores basic programs, application programs, and data, such as configuration information, for operation of the main base station. The storage 645 may include a volatile memory, a nonvolatile memory, or a combination of a volatile memory and a nonvolatile memory. In addition, the storage 645 provides the stored data at the request of the controller 650.

The controller 650 controls the overall operation of the core network entity. For example, the controller 650 transmits/receives signals through the communication unit 640. In addition, the controller 650 records data in the storage 645 and reads the data from the storage 645. To this end, the controller 650 may include at least one processor. According to various embodiments, the controller 650 may control to perform synchronization by using a wireless communication network. For example, the controller 650 may control the core network entity to perform operations according to various embodiments described above.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented.

## Claims

1. A method performed by a session management function (SMF) entity in a mobile communication system, the method comprising:
receiving, from an access and mobility management function (AMF) entity, a request for a protocol data unit (PDU) session for a service associated with a user equipment (UE);
transmitting, to a policy control function (PCF) entity, a first message for requesting information on an energy class for the service, based on the request;
receiving, from the PCF entity, a second message comprising the information on the energy class in response to the first message; and
identifying whether a paging signal for the UE is delayed to be transmitted based on the information on the energy class and information on a network energy state associated with the PDU session.

2. The method of claim 1, wherein the information on the network energy state comprises information on an energy value consumed in a network comprising the SMF entity,
wherein the information on the energy class comprises information on a priority of energy consumption for the PDU session, and
wherein the information on the energy class is based on the UE or the PDU session.

3. The method of claim 2, wherein, in case that the energy value consumed in the network is greater than a threshold value allowed for the network or in case that the priority is lower than a predetermined priority, transmission of the paging signal for the UE is delayed by a predetermined time.

4. The method of claim 3, wherein the predetermined time is based on at least one piece of the information on the network energy state or the information on the energy class.

5. A method performed by a policy control function (PCF) entity in a mobile communication system, the method comprising:
receiving, from a session management function (SMF) entity, a first message for requesting information on an energy class for a service associated with a user equipment (UE); and
transmitting, to the SMF entity, a second message comprising the information on the energy class in response to the first message,
wherein whether a paging signal for the UE is delayed to be transmitted is based on the information on the energy class and information on a network energy state associated with a protocol data unit (PDU) session for the service.

6. The method of claim 5, wherein the information on the network energy state comprises information on an energy value consumed in a network comprising the SMF entity,
wherein the information on the energy class comprises information on a priority of energy consumption for the PDU session, and
wherein the information on the energy class is based on the UE or the PDU session.

7. The method of claim 6, wherein, in case that the energy value consumed in the network is greater than a threshold value allowed for the network or in case that the priority is lower than a predetermined priority, transmission of the paging signal for the UE is delayed by a predetermined time.

8. The method of claim 7, wherein the predetermined time is based on at least one piece of the information on the network energy state or the information on the energy class.

9. A session management function (SMF) entity in a mobile communication system, the SMF comprising:
a transceiver; and
a controller connected to the transceiver,
wherein the controller is configured to:
receive, from an access and mobility management function (AMF) entity, a request for a protocol data unit (PDU) session for a service associated with a user equipment (UE);
transmit, to a policy control function (PCF) entity, a first message for requesting information on an energy class for the service, based on the request;
receive, from the PCF entity, a second message comprising the information on the energy class in response to the first message; and
identify whether a paging signal for the UE is delayed to be transmitted based on the information on the energy class and information on a network energy state associated with the PDU session.

10. The SMF entity of claim 9, wherein the information on the network energy state comprises information on an energy value consumed in a network comprising the SMF entity,
wherein the information on the energy class comprises information on a priority of energy consumption for the PDU session, and
wherein the information on the energy class is based on the UE or the PDU session.

11. The SMF entity of claim 10, wherein, in case that the energy value consumed in the network is greater than a threshold value allowed for the network or in case that the priority is lower than a predetermined priority, transmission of the paging signal for the UE is delayed by a predetermined time.

12. The SMF entity of claim 11, wherein the predetermined time is based on at least one piece of the information on the network energy state or the information on the energy class.

13. A policy control function (PCF) entity in a mobile communication system, the PCF entity comprising:
a transceiver; and
a controller connected to the transceiver,
wherein the controller is configured to:
receive, from a session management function (SMF) entity, a first message for requesting information on an energy class for a service assoacited with a user equipment (UE); and
transmit, to the SMF entity, a second message comprising the information on the energy class in response to the first message,
wherein whether a paging signal for the UE is delayed to be transmitted is based on the information on the energy class and information on a network energy state associated with a protocol data unit (PDU) session for the service.

14. The PCF entity of claim 13, wherein the information on the network energy state comprises information on an energy value consumed in a network comprising the SMF entity,
wherein the information on the energy class comprises information on a priority of energy consumption for the PDU session, and
wherein the information on the energy class is based on the UE or the PDU session.

15. The PCF entity of claim 14, wherein, in case that the energy value consumed in the network is greater than a threshold value allowed for the network or in case that the priority is lower than a predetermined priority, transmission of the paging signal for the UE is delayed by a predetermined time.
